# EUROPEAN PATENT APPLICATION

(11) **EP 4 714 986 A1**
(43) Date of publication of application: **25.03.2026**
(21) Application number: 25200320.7
(22) Date of filing: 04.09.2025
(51) Int. Cl.: C08F 4/40, C08F 4/34, C08F 299/04, C08K 5/098, C08K 5/14, C08F 299/00

(54) **LOW COLOUR CURE SYSTEM**

(30) Priority: 23.09.2024 EP 24202065
(71) Applicant: Nouryon Chemicals International B.V., 1101 BZ Amsterdam (NL)
(72) Inventor: BEEK, Waldo Joseph Elisabeth, 1101 BZ Amsterdam (NL); DIJKSTRA, Matthijs Jan, 1101 BZ Amsterdam (NL)
(74) Representative: Ingrassia, Fisher & Lorenz UK Ltd.

(57) **Abstract**

The present disclosure relates to an accelerator solution, a pre-accelerated resin composition comprising said accelerator solution, a curable resin composition comprising said pre-accelerated resin composition, and a method for curing a curable resin.

## Description

### Technical Field

The present disclosure relates to an accelerator composition, a pre-accelerated resin composition comprising said accelerator composition, a curable resin composition comprising said pre-accelerated resin composition, and a method for curing a curable resin. The compositions and methods of the present disclosure provide for a colorless cured product.

### Background

It is well known that curable resins (e.g., unsaturated polyester resins, vinyl ester resins, (meth)acrylate resins) can be cured using organic peroxides, and that said curing can be accelerated using a metal-based accelerator (e.g., WO 2012/126917, WO 2015/1211778, WO 2020/168201). A substantial problem with such metal-based accelerators, however, is that they can be unstable (i.e., form precipitates and/or lose performance when stored for extended periods of time) and tend to lead to strong discoloration and/or frosting of the resin after cure, neither of which traits in the cured resin are desirable in many applications. Furthermore, many of the known and commercially available accelerators use cobalt metal and/or alkyl- or alkanol-amine stabilizers (e.g., diethanolamine; WO 2012/126917), however both components are at serious risk of legislative bans (e.g. REACH in Europe) due to their poor environmental and toxicity profiles.

It was therefore an object of the present disclosure to provide a cure system that avoided all these drawbacks.

### Summary

It has been found that these technical issues are solved by curing a curable resin using a specific accelerator composition and a ketone peroxide or hydrogen peroxide. Accordingly, the present disclosure may be summarized by the following Aspects:
**Aspect 1.** A composition comprising:
   (i) a copper compound,
   (ii) an ascorbic acid and/or a fatty acid ester of an ascorbic acid,
   (iii) a bipyridine, and
   (iv) a solvent, wherein the solvent comprises at least one phosphorous compound with the formulae P(R)₃ and/or P(R)₃=O, wherein each R is independently hydrogen, an alkyl group with 1 to 6 carbon atoms, or an alkoxy group with 1 to 6 carbon atoms, preferably an alkyl group with 1 to 4 carbon atoms or an alkoxy group with 1 to 4 carbon atoms, more preferably an alkoxy group with 1 to 3 carbon atoms.
**Aspect 2.** The composition of Aspect 1, wherein the copper compound (i) comprises a copper(II) compound.
**Aspect 3.** The composition of Aspects 1 or 2, wherein the copper compound (i) is copper(II) acetate.
**Aspect 4.** The composition of any one of the preceding Aspects, wherein the fatty acid ester of ascorbic acid is 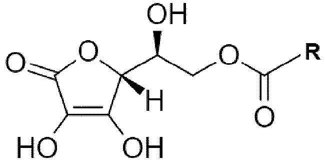 wherein R is a C12-C18 alkyl group.
**Aspect 5.** The composition of any one of the preceding Aspects, wherein the fatty acid ester of ascorbic acid is ascorbyl palmitate.
**Aspect 6.** The composition of any one of the preceding Aspects, wherein (iii) is a 2,2'-bipyridine of formula (I): 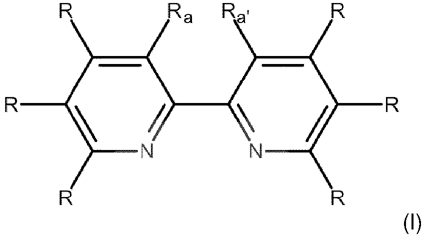 wherein:
   each R is independently selected from H, alkyl, aryl, heteroaryl, or -A-R², wherein A is O or NR³, and wherein R² and R³ are each independently H, alkyl, aryl, or heteroaryl;
   Ra is selected from H, alkyl, aryl, heteroaryl, or -A-R², wherein A is O or NR³, and wherein R² and R³ are each independently H, alkyl, aryl, or heteroaryl;
   Ra' is selected from H, alkyl, aryl, heteroaryl, or -A-R², wherein A is O or NR³, and wherein R² and R³ are each independently H, alkyl, aryl, or heteroaryl; or
   Ra and Ra' together form a ring, preferably a C6 aromatic ring.
**Aspect 7.** The composition of any one of the preceding Aspects, wherein (iii) is a 2,2'-bipyridine of formula (II): 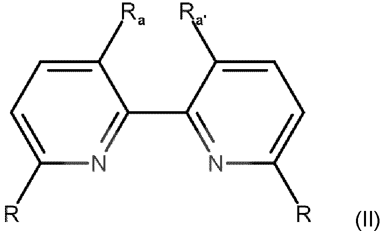 or a 2,2'-bipyridine of formula (III): 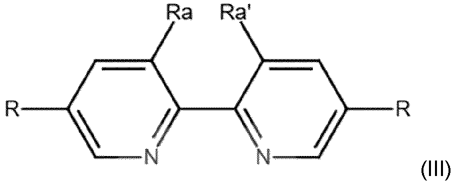 wherein:
   each R is independently selected from H, alkyl, aryl, heteroaryl, or -A-R², wherein A is O or NR³, and wherein R² and R³ are each independently H, alkyl, aryl, or heteroaryl; and
   Ra and Ra' are H, or alternatively Ra and Ra' together form a ring, preferably a C6 aromatic ring (to form a 1,10-phenanthroline).
**Aspect 8.** The composition of any one of the preceding claims, wherein (iii) is unsubstituted 2,2'-bipyridine: 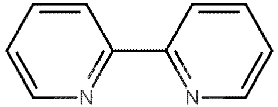
**Aspect 9.** The composition of any one of the preceding Aspects, wherein at least two R-groups of the at least one phosphorus compound are alkyl groups or alkoxy groups, more preferably all R-groups are alkyl groups or alkoxy groups, most preferably all R-groups are alkoxy groups.
**Aspect 10.** The composition of any one of the preceding Aspects, wherein the solvent (iv) comprises or consists of triethyl phosphate.
**Aspect 11.** The composition of any one of the preceding Aspects, wherein:
   (i) is copper(II) acetate;
   (ii) is ascorbic acid and/or ascorbyl palmitate;
   (iii) is 2,2-bipyridine; and
   (iv) comprises or consists of triethyl phosphate.
**Aspect 12.** The composition of any one of the preceding Aspects, wherein the accelerator solution consists of components (i), (ii), (iii) and (iv).
**Aspect 13.** Pre-accelerated resin composition comprising:
   (i) a curable resin,
   (ii) a composition according to any one of Aspects 1-12, and
   (iii) optionally a filler.
**Aspect 14.** The pre-accelerated resin composition of Aspect 13, wherein the curable resin is an unsaturated polyester resin, a vinyl ester resin, or a (meth)acrylate resin. **Aspect 15.** The pre-accelerated resin composition of Aspects 13 or 14, wherein the optional filler is an inorganic filler.
**Aspect 16.** A curable resin composition comprising:
   (i) a pre-accelerated resin composition according to any one of aspects 12 to 15, and
   (ii) at least one peroxide selected from ketone peroxides, organic peroxides comprising hydrogen peroxide, hydrogen peroxide, and mixtures thereof, preferably ketone peroxides or hydrogen peroxide, most preferably ketone peroxides.
**Aspect 17.** The curable resin composition of Aspect 16, wherein the at least one ketone peroxide is methyl ethyl ketone peroxide (MEKP), methyl isobutyl ketone peroxide (MIBK), methyl isopropyl ketone peroxide (MIKP), cyclohexanone peroxide (CYHP), acetyl acetone peroxide, or a combination thereof.
**Aspect 18.** A kit-of-parts comprising:
   (i) a first component comprising a curable resin,
   (ii) a second component comprising a composition according to any one of Aspects 1-12, and
   (iii) a third component comprising at least one peroxide selected from ketone peroxides, organic peroxides comprising hydrogen peroxide, hydrogen peroxide, and mixtures thereof, preferably ketone peroxides or hydrogen peroxide, most preferably ketone peroxides.
**Aspect 19.** A method for curing a curable resin, comprising contacting the curable resin with a composition according to any one of Aspects 1-12 and at least one peroxide selected from ketone peroxides, organic peroxides comprising hydrogen peroxide, hydrogen peroxide, and mixtures thereof, preferably ketone peroxides or hydrogen peroxide, most preferably ketone peroxides.
**Aspect 20.** The method of Aspect 19, wherein the curable resin is an unsaturated polyester resin, a vinyl ester resin, or a (meth)acrylate resin.
**Aspect 21.** The method of Aspects 19 or 19, wherein the ketone peroxide is methyl ethyl ketone peroxide (MEKP), methyl isobutyl ketone peroxide (MIBK), methyl isopropyl ketone peroxide (MIKP), cyclohexanone peroxide (CYHP), acetyl acetone peroxide, or a combination thereof.

### Figures

Figure 1 is a close-up photograph of a cured resin according to the present disclosure.
Figure 2A is a close-up photograph of the cured resin of Example 2J (comparative).
Figure 2B is a close-up photograph of the cured resin of Example 2G (comparative).

### Detailed Description

In a first aspect, the present disclosure relates to an accelerator composition (preferably an accelerator solution) comprising:
(i) a copper compound,
(ii) an ascorbic acid and/or a fatty acid ester of an ascorbic acid,
(iii) a bipyridine, and
(iv) a solvent, wherein the solvent comprises at least one phosphorous compound with the formulae P(R)₃ and/or P(R)₃=O, wherein each R is independently hydrogen, an alkyl group with 1 to 6 carbon atoms, or an alkoxy group with 1 to 6 carbon atoms.

This accelerator composition was found to be surprisingly stable and, when combined with a ketone peroxide or hydrogen peroxide, resulted in excellent cure of a curable resin, with no notable coloring or opacity in the cured resin.

Component (i) of the accelerator composition of the first aspect of the present disclosure is a copper compound. Suitable copper compounds include, but are not necessarily limited to, halides, nitrates, sulphates, sulphonates, phosphates, phosphonates, oxides, and carboxylate. Examples of suitable carboxylates are lactate, 2-ethyl hexanoate, acetate, proprionate, butyrate, oxalate, laurate, oleate, linoleate, palmitate, stearate, acetyl acetonate, octanoate, nonanoate, heptanoate, neodecanoate, acetylacetonate, or naphthenate. Preferred copper compounds are copper chloride, nitrate, sulphate, lactate, 2-ethyl hexanoate, octanoate, nonanoate, heptanoate, neodecanoate, acetylacetonate, naphthenate, and acetate. Copper(II) compounds are preferred. The most preferred copper compound of the present disclosure is copper (II) acetate, preferably copper (II) acetate monohydrate.

The copper compound is preferably present in the accelerator in an amount of from 0.01 to 2 wt.%, preferably 0.05 to 1 wt.%, preferably 0.1 to 0.5 wt.% relative to the total weight of the accelerator composition.

Component (ii) of the accelerator composition of the first aspect of the present disclosure is an ascorbic acid and/or a fatty acid ester of an ascorbic acid. "Ascorbic acid" as used herein includes L-ascorbic acid (CAS No. 50-81-7) and D-isoascorbic acid (CAS No. 89-65-6). A fatty acid ester of an ascorbic acid may be obtained by reacting a free OH group of an ascorbic acid with a fatty acid to generate the respective ester. Any suitable esterification process may be used to obtain the fatty acid ester of an ascorbic acid. The fatty acid is preferably derived from a renewable source, such as natural fats and oils. In a preferred embodiment, the fatty acid is palmitic acid (hexadecanoic acid), a linear saturated C16 fatty acid found in animals, plants and microorganisms. In one embodiment, the fatty acid ester of ascorbic acid is 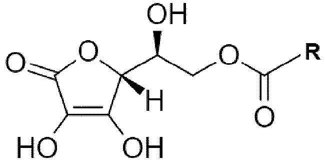 wherein R is a C8-C30 alkyl group, preferably a C12-C18 alkyl group. The alkyl group may be saturated or unsaturated, and may be branched or linear. Preferably, the fatty acid ester of an ascorbic acid is ascorbyl palmitate (CAS No. 137-66-6).

Component (ii) is preferably present in the accelerator in an amount of from 5 to 50 wt.%, preferably 10 to 40 wt.%, relative to the total weight of the accelerator composition.

Component (iii) of the accelerator composition of the first aspect of the present disclosure is a bipyridine. The surprising stability of the accelerator compositions was, in part, attributed to the bipyridine component, as a comparative example using nicotinamide instead of the bipyridine component was found to be stable for less than 9 hours (performance degraded rapidly thereafter). Component (iii) is preferably a 2,2'-bipyridine of formula (I): 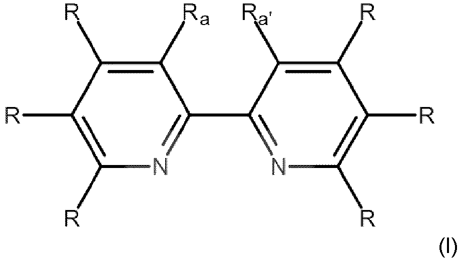 wherein:
each R is independently selected from H, alkyl, aryl, heteroaryl, or -A-R², wherein A is O or NR³, and wherein R² and R³ are each independently H, alkyl, aryl, or heteroaryl;
Ra is selected from H, alkyl, aryl, heteroaryl, or -A-R², wherein A is O or NR³, and wherein R² and R³ are each independently H, alkyl, aryl, or heteroaryl;
Ra' is selected from H, alkyl, aryl, heteroaryl, or -A-R², wherein A is O or NR³, and wherein R² and R³ are each independently H, alkyl, aryl, or heteroaryl; or
Ra and Ra' together form a ring, preferably a C6 aromatic ring (to form a 1,10-phenanthroline). More preferably, component (iii) is a 2,2'-bipyridine of formula (II) 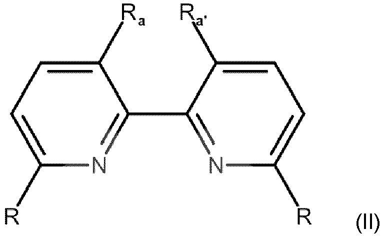 or a 2,2'-bipyridine of formula formula (III): 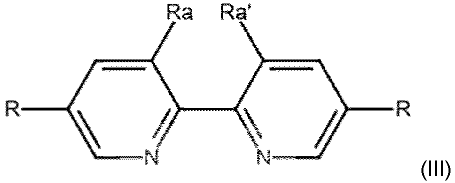 wherein:
   each R is independently selected from H, alkyl, aryl, heteroaryl, or A-R², wherein A is O or NR³, and wherein R² and R³ are each independently H, alkyl, aryl, or heteroaryl, and
   Ra and Ra' are H or together form a ring, preferably a C6 aromatic ring (to form a 1,10-phenanthroline). Preferably, each R is independently selected from H, C1-C6 alkyl, or -A-R², wherein A is O, and wherein R² is H or C1-C6 alkyl. Rₐ and R_{a'} are preferably H. Non-limiting examples of suitable bipyridines for use as component (iii) include 2,2'-bipyridine, 5,5'-Dimethyl-2,2'-bipyridine, 4,4'-Dimethyl-2,2'-bipyridine, 4,4'-Dimethoxy-2-2 -bipyridine, 4,4'-Di-tert-butyl-2,2'-dipyridyl, and combinations thereof. Most preferably, component (iii) is 2,2'-bipyridine:

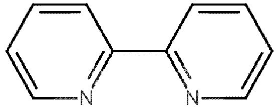

Component (iii) is preferably present in the accelerator in an amount of from 0.05 to 5 wt.%, preferably 0.1 to 3 wt.%, more preferably 0.5 to 2 wt.% relative to the total weight of the accelerator composition.

Component (iv) of the accelerator composition of the first aspect of the present disclosure is a solvent, wherein the solvent comprises or consists of at least one phosphorous compound with the formulae P(R)₃ (phosphine) and/or P(R)₃=O (phosphine oxide), wherein each R is independently hydrogen, an alkyl group with 1 to 6 carbon atoms, or an alkoxy group with 1 to 6 carbon atoms. It was found that solvents that did not comprise at least one of said phosphorus compounds led to unstable compositions (rapid formation of solids). Preferably, at least two R-groups are selected from either alkyl groups or alkoxy groups, more preferably all R-groups are selected from either alkyl groups or alkoxy groups, more preferably all R-groups are selected from alkoxy groups. Preferably, each R is independently an alkyl group with 1 to 4 carbon atoms or an alkoxy group with 1 to 4 carbon atoms, more preferably an alkyl group with 1 to 3 carbon atoms or an alkoxy group with 1 to 3 carbon atoms. More preferably, each R is independently an alkoxy group with 1 to 6 carbon atoms (i.e., a tri-(C₁₋₆)alkyl-phosphate), more preferably 1 to 4 carbon atoms, and most preferably 1 to 3 carbon atoms, such as methoxy (R = MeO-), ethoxy (R = EtO-), propoxy (R = PrO-), or isopropoxy (R = iPrO-). Preferably, the solvent comprises at least one phosphorous compound with the formula P(R)₃=O, wherein each R is independently an alkyl group with 1 to 6 carbon atoms, preferably 1 to 4 carbon atoms, more preferably 1 to 3 carbon atoms, or an alkoxy group with 1 to 6 carbon atoms, preferably 1 to 4 carbon atoms, more preferably 1 to 3 carbon atoms. Triethyl phosphate (triethoxyphosphine oxide; CAS 78-40-0; R = EtO- [i.e., P(OEt)₃=O]) is most preferred.

The solvent component (iv) may comprise or consist of the at least one phosphorous compound as described above. Preferably, the at least one phosphorus compound constitutes at least 50 wt.% of the solvent component (iv), preferably at least 75 wt.% of the solvent component (iv), more preferably at least 90 wt.% of the solvent component (iv), and most preferably at least 99 wt.% of the solvent component (iv), such as 100 wt.% of the solvent component (iv), relative to the total weight of the solvent component (iv). If one or more co-solvents are included in the solvent component (iv), it is preferably included in a weight ratio of phosphorous compound(s) to co-solvent(s) of about 50:50 to >99:1, preferably about 75:25 to >99:1, preferably about 90:10 to >99:1. For example, a stable analogue of Example 1B (below) was obtained when using a solvent mixture of 90:10 triethylphosphate to butyldiglycol instead of 100% triethylphosphate.

The solvent component (iv) typically makes up the mass balance of the accelerator composition, and is typically present in the accelerator composition in an amount of from about 10 to about 90 wt.%, preferably about 50 to about 90 wt.% relative to the total weight of the accelerator composition.

The accelerator composition may optionally comprise water. The water content is preferably not more than 50 wt%, more preferably not more than 40 wt%, more preferably not more than 20 wt%, even more preferably not more than 10 wt%, and most preferably not more than 5 wt%, all based on the total weight of the accelerator composition.

In a preferred embodiment of the first aspect, the accelerator composition comprises:
(i) 0.01 to 2 wt.% of a copper compound,
(ii) 5 to 50 wt.% of an ascorbic acid and/or a fatty acid ester of an ascorbic acid,
(iii) 0.05 to 5 wt.% of a bipyridine, and
(iv) a solvent, wherein the solvent comprises at least one phosphorous compound with the formulae P(R)₃ and/or P(R)₃=O, wherein each R is independently hydrogen, an alkyl group with 1 to 6 carbon atoms, or an alkoxy group with 1 to 6 carbon atoms.

In a further preferred embodiment of the first aspect, the accelerator composition comprises:
(i) 0.01 to 2 wt.% of a copper (II) compound,
(ii) 5 to 50 wt.% of an ascorbic acid and/or a fatty acid ester of an ascorbic acid,
   wherein the fatty acid ester of an ascorbic acid is 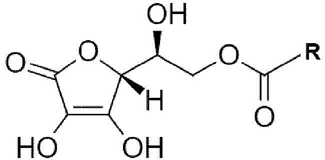 wherein R is a C12-C18 alkyl group
(iii) 0.05 to 5 wt.% of a 2,2'-bipyridine of formula (II) 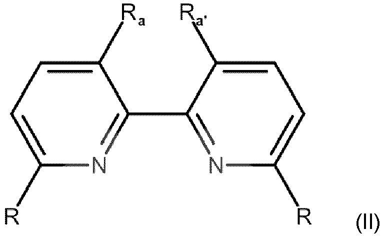 or a 2,2'-bipyridine of formula formula (III): 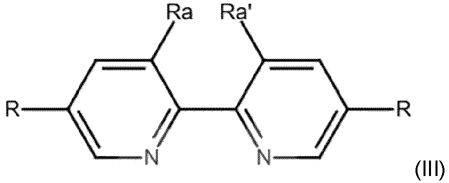 wherein:
   each R is independently selected from H, alkyl, aryl, heteroaryl, or -A-R², wherein A is O or NR³, and wherein R² and R³ are each independently H, alkyl, aryl, or heteroaryl and
   Ra and Ra' are H or together form a ring, preferably a C6 aromatic ring (to form a 1,10-phenanthroline), and
(iv) a solvent, wherein the solvent comprises at least one phosphorous compound with the formulae P(R)₃ and/or P(R)₃=O, wherein each R is independently an alkyl group with 1 to 4 carbon atoms or an alkoxy group with 1 to 4 carbon atoms.

In a further preferred embodiment of the first aspect, the accelerator composition comprises:
(i) 0.01 to 2 wt.% of copper (II) acetate,
(ii) 5 to 50 wt.% of an ascorbic acid and/or an ascorbic acid palmitate,
(iii) 0.05 to 5 wt.% of a bipyridine selected from 2,2'-bipyridine, 5,5'-Dimethyl-2,2'-bipyridine, 4,4'-Dimethyl-2,2'-bipyridine, 4,4'-Dimethoxy-2-2 -bipyridine, 4,4'-Di-tert-butyl-2,2'-dipyridine, and combinations thereof, preferably 2,2'-bipyridine, and
(iv) a solvent, wherein the solvent comprises or consists of one or more phosphorous compounds with the formula P(R)₃=O, wherein each R is independently an alkoxy group with 1 to 3 carbon atoms, preferably 2 carbon atoms (i.e., triethyl phosphate).

In one embodiment, the accelerator composition of the first aspect may consist of components (i)-(iv) as described above.

The accelerator composition may be prepared by simply mixing the ingredients, optionally with intermediate heating and/or mixing steps.

In a second aspect, the present disclosure relates to a pre-accelerated resin composition comprising:
(i) a curable resin,
(ii) an accelerator composition of the first aspect of the present disclosure, and
(iii) optionally a filler and/or a reinforcing fiber.

Any (radically) curable resin may be used in the pre-accelerated resin composition. Suitable resins include alkyd resins, unsaturated polyester (UP) resins, vinyl ester resins, (meth)acrylate resins, polyurethanes, epoxy resins, and mixtures thereof. Preferred resins are (meth)acrylate resins, UP resins and vinyl ester resins. In the context of the present application, the terms "unsaturated polyester resin" and "UP resin" refer to the combination of unsaturated polyester resin and ethylenically unsaturated monomeric compound. The term "(meth)acrylate resin" includes the combination of acrylate or methacrylate resin and ethylenically unsaturated monomeric compound. UP resins and acrylate resins as defined above are common practice and commercially available.

Suitable UP resins to be cured by the process of the present invention are so- called ortho-resins, iso-resins, iso-npg resins, and dicyclopentadiene (DCPD) resins. Examples of such resins are maleic, fumaric, ally lie, vinylic, and epoxy-type resins, bisphenol A resins, terephthalic resins, and hybrid resins.

Vinyl ester resins include acrylate resins, based on, e.g. methacrylate, diacrylate, dimethacrylate, and oligomers thereof.

(Meth)acrylate resins include acrylates, methacrylates, diacrylates and dimethacrylates, and oligomers thereof.

Examples of ethylenically unsaturated monomeric compounds include styrene and styrene derivatives like alpha-methyl styrene, vinyl toluene, indene, divinyl benzene, vinyl pyrrolidone, vinyl siloxane, vinyl caprolactam, stilbene, but also diallyl phthalate, dibenzylidene acetone, allyl benzene, methyl methacrylate, methylacrylate, (meth)acrylic acid, diacrylates, dimethacrylates, acrylamides; vinyl acetate, triallyl cyanurate, triallyl isocyanurate, allyl compounds which are used for optical application (such as (di)ethylene glycol diallyl carbonate), chlorostyrene, tert-butyl styrene, tert-butylacrylate, butanediol dimethacrylate and mixtures thereof. Suitable examples of (meth)acrylates reactive diluents are PEG200 di(meth)acrylate, 1 ,4-butanediol di(meth)acrylate, 1 ,3-butanediol di(meth)acrylate, 2,3-butanedioldi(meth)acrylate, 1 ,6-hexanediol di(meth)acrylate and its isomers, diethyleneglycol di(meth)acrylate,triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, PPG250 di(meth)acrylate, tricyclodecane dimethylol di(meth)acrylate, 1 , 10-decanediol di(meth)acrylate, tetraethylene glycol di(meth)acrylate, trimethylolpropanetri(meth)acrylate, glycidyl (meth)acrylate, (bis)maleimides, (bis)citraconimides, (bis)itaconimides, and mixtures thereof.

The amount of ethylenically unsaturated monomer in the pre-accelerated resin composition is preferably at least 1 wt%, based on the weight of the resin, more preferably at least 10 wt%, more preferably at least 25 wt%, and most preferably at least 50 wt%.

The pre-accelerated resin composition preferably comprises the accelerator composition in amounts of at least 0.01 parts by weight (pbw) per 100 pbw of the curable resin (i), preferably at least 0.1 pbw per 100 pbw of the curable resin (i), and preferably not more than 5 pbw per 100 pbw of the curable resin (i), more preferably not more than 3 pbw per 100 pbw of the curable resin (i). Preferably, the pre-accelerated resin composition comprises the accelerator composition in amounts of from 0.01-5 pbw per 100 pbw of the curable resin (i), preferably 0.1-3 pbw per 100 pbw of the curable resin (i).

The pre-accelerated resin composition may also comprise a filler and/or a reinforcement fibre (iii). Examples of reinforcement fibres are glass fibres, carbon fibres, aramid fibres (e.g. Twaron^{®}), and natural fibers (e.g. jute, kenaf, industrial hemp, flax (linen), ramie, etc.). The fibres may be in the form of a fabric. Examples of fillers are quartz, sand, aluminium trihydroxide, magnesium hydroxide, chalk, calcium hydroxide, clays, titanium dioxide, and lime. The nature of the filler component is not limited to any specific filler type. Any suitable amount of filler may be included in the pre-accelerated resin composition, such as up to about 500 parts by weight (pbw) of the filler (iii) per 100 pbw of the curable resin (i), for example up to 200 parts by weight (pbw) of the filler (iii) per 100 pbw of the curable resin (i).

Further optional additives that may be present in the pre-accelerated resin composition include, but are not necessarily limited to, pigments, radical inhibitors, fire retardants, and promoters.

In a preferred embodiment, the pre-accelerated resin composition comprises:
(i) a curable resin,
(ii) 0.01-5 parts by weight per 100 parts by weight (i) of an accelerator composition of the first aspect of the present disclosure, and
(iii) 0-500 parts by weight per 100 parts by weight (i) of a filler and/or a reinforcement fibre.

In another preferred embodiment, the pre-accelerated resin composition comprises:
(i) a curable resin, wherein the curable resin is an unsaturated polyester resin, a vinyl ester resin, a (meth)acrylate resin, or a combination thereof
(ii) 0.01-5 parts by weight per 100 parts by weight (i) of an accelerator composition of the first aspect of the present disclosure, and
(iii) 0-200 parts by weight per 100 parts by weight (i) of a filler and/or a reinforcement fibre.

The pre-accelerated resin of the second aspect of the present disclosure may be prepared in various ways, for example, by mixing the individual ingredients of the accelerator composition with the resin and optional filler, or by mixing the resin, including optional monomer and optional filler, with a pre-prepared accelerator composition according to the present disclosure. The latter method is preferred.

In a third aspect, the present disclosure relates to a curable resin composition comprising:
(i) a pre-accelerated resin composition of the second aspect, and
(ii) at least one peroxide selected from ketone peroxides, organic peroxides comprising hydrogen peroxide, hydrogen peroxide, and mixtures thereof, preferably ketone peroxides or hydrogen peroxide, most preferably ketone peroxides.

The at least one peroxide (ii) is preferably one or more ketone peroxides, more preferably one or more ketone peroxides selected from the group consisting of methyl ethyl ketone peroxide (MEKP), methyl isopropyl ketone peroxide (MIKP), methyl isobutyl ketone peroxide (MIBK), cyclohexanone peroxide (CYHP), acetyl acetone peroxide, and combinations thereof. MEKP and MIKP are particularly preferred, with MIKP being most preferred.

The total amount of (ketone) peroxide in the curable resin composition is preferably 0.03-5 parts by weight (pbw) expressed as weight parts of pure peroxide per 100 pbw of the curable resin (i) of the pre-accelerated resin composition, more preferably 0.5-4 parts by weight (pbw) expressed as weight parts of pure peroxide per 100 pbw of the curable resin (i) of the pre-accelerated resin composition.

In a fourth aspect, the present disclosure relates to a kit-of-parts comprising:
(i) a first component comprising a curable resin,
(ii) a second component comprising an accelerator composition of the first aspect, and
(iii) a third component comprising at least one peroxide selected from ketone peroxides, organic peroxides comprising hydrogen peroxide, hydrogen peroxide, and mixtures thereof, preferably ketone peroxides or hydrogen peroxide, most preferably ketone peroxides.

The curable resin, the accelerator composition, and the (ketone) peroxide are as described above. The first component (i) may optionally further comprise a filler and/or a reinforcement fibre. Non-limiting examples of suitable reinforcement fibres are glass fibres, carbon fibres, aramid fibres (e.g. Twaron^{®}), and natural fibers (e.g. jute, kenaf, industrial hemp, flax (linen), ramie, etc.). The fibres may be in the form of a fabric. Examples of fillers are quartz, sand, aluminium trihydroxide, magnesium hydroxide, chalk, calcium hydroxide, clays, titanium dioxide, and lime. The nature of the filler component is not limited to any specific filler type. Any suitable amount of filler may be included in the first component (i), such as up to about 200 parts by weight (pbw) of the filler per 100 pbw of the curable resin. Further optional additives that may be present in the first component (i) include, but are not necessarily limited to, pigments, radical inhibitors, fire retardants, and promoters. If the first component comprises a filler or additive, then the third component preferably comprises a ketone peroxide.

In use, the first component, second component and third component are mixed together, and the resulting mixture is cured to form a cured resin.

In a fifth aspect, the present disclosure relates to a method for curing a curable resin, comprising contacting the curable resin with an accelerator composition of the first aspect and at least one peroxide selected from ketone peroxides, organic peroxides comprising hydrogen peroxide, hydrogen peroxide, and mixtures thereof, preferably ketone peroxides or hydrogen peroxide, most preferably ketone peroxides. In a preferred embodiment, the accelerator composition is added to the curable resin to form a mixture, and the at least one ketone peroxide is then added to said mixture. In an alternative embodiment, the at least one ketone peroxide is added to the curable resin to form a mixture, and the accelerator composition is then added to mixture.

Again, the curable resin, the accelerator composition, and the (ketone) peroxide are as described above.

When the curable resin, the (ketone) peroxide, the accelerator composition, and any optional other ingredients have been combined, these compounds are mixed and dispersed. The curing process can be carried out at any temperature from -15°C up to 250°C. Preferably, it is carried out at ambient temperatures commonly used in applications such as hand lay-up, spray-up, filament winding, resin transfer moulding, coatings (e.g. gelcoat and standard coatings), button production, centrifugal casting, corrugated sheets or flat panels, relining systems, kitchen sinks via pouring compounds, etc. However, it can also be used in SMC, BMC, pultrusion techniques, and the like, for which temperatures up to 180°C, more preferably up to 150°C, most preferably up to 100°C, are used. The cured composition can be subjected to a post-cure treatment to further optimize the hardness. Such post-cure treatment is generally performed at a temperature in the range 40-180°C for 30 min to 15 hours.

The cured resin finds use in a wide variety of applications, including marine applications, chemical anchoring, roofing, construction, relining, pipes and tanks, flooring, windmill blades, laminates, polymer concrete, tabletops, wash basins, sanitary products, etc.

It is noted that various elements of the present disclosure, including but not limited to preferred ranges for the various parameters, can be combined unless they are mutually exclusive.

### Worked examples

The present disclosure will be elucidated by the following examples without being limited thereto or thereby.

Reactivity was determined by exotherm measurements according to a modified standard NEN-EN ISO 584. Experiments in the examples were performed by applying a constant start temperature of 20 °C. Temperature-time curves were recorded on a Eurotherm Chessell recorder type 6100A. Gel time (GT) = time in minutes elapsed between the start of the experiment and the monitored temperature rise of 5.6°C above the start temperature. Time to peak (TTP) = time elapsed between the start of the experiment and the moment that the peak temperature is reached. Peak exotherm (PE) = the maximum temperature that is reached. In the following examples, gel time (GT), time to peak (TTP) and peak exotherm (PE) were determined using the Eurotherm Chessell recorder type 6100A. The opacity and colour of the cured resin were determined visually.

### Example 1

The following accelerator compositions were prepared (in 200g batches) by combining the ingredients in the following tables in the stated amounts and then mixing (stirring) the resulting composition at 50°C for 60 mins:

| **Example 1A** | **Wt (g)** | **Wt%** |
|---|---|---|
| Cu(II) acetate (monohydrate) | 0.4 | 0.2 |
| 2,2-bipyridine | 2 | 1 |
| Ascorbic acid | 28 | 14 |
| Triethyl phosphate | 169.6 | 84.8 |

| **Example 1B** | **Wt (g)** | **Wt%** |
|---|---|---|
| Cu(II) acetate (monohydrate) | 0.4 | 0.2 |
| 2,2-bipyridine | 2 | 1 |
| Ascorbic acid palmitate | 66 | 33 |
| Triethyl phosphate | 131.6 | 65.8 |

| **Example 1C** | **Wt (g)** | **Wt%** |
|---|---|---|
| Cu(II) acetate (monohydrate) | 0.4 | 0.2 |
| 2,2-bipyridine | 2 | 1 |
| (D)-Iso-Ascorbic acid | 28 | 14 |
| Triethyl phosphate | 169.6 | 84.8 |

| **Example 1D** | **Wt (g)** | **Wt%** |
|---|---|---|
| Cu(II) acetate (monohydrate) | 0.4 | 0.2 |
| 2,2-bipyridine | 2 | 1 |
| Ascorbic acid palmitate | 20 | 10 |
| Ascorbic acid | 20 | 10 |
| Triethyl phosphate | 157.6 | 78.8 |

| **Example 1E** | **Wt (g)** | **Wt%** |
|---|---|---|
| Cu naphthenate | 1.6 | 0.8 |
| 2,2-bipyridine | 2 | 1 |
| Ascorbic acid palmitate | 66 | 33 |
| Triethyl phosphate | 130.4 | 65.2 |

| **Example 1F** | **Wt (g)** | **Wt%** |
|---|---|---|
| Cu(II) acetylacetonate | 0.54 | 0.27 |
| 2,2-bipyridine | 2 | 1 |
| Ascorbic acid palmitate | 66 | 33 |
| Triethyl phosphate | 131.46 | 65.73 |

These accelerator compositions were found to be surprisingly stable, with no notable formation of precipitates or loss in performance even after a storage period of 4 weeks. The surprising stability of the accelerator compositions was attributed to the bipyridine component in combination with the solvent type, as a comparative example using nicotinamide instead of the bipyridine component was found to be stable for less than 9 hours (performance degraded rapidly thereafter), as was another comparative example using tris(2-ethylhexyl) phosphate instead of triethyl phosphate (rapid and substantial formation of precipitates). These stable accelerator compositions thus present a viable alternative to those which use cobalt metal accelerators and/or amine stabilizers which are under threat of legislative bans due to their poor toxicity profiles.

### Example 2

Accelerator composition Ex. 1B was tested alongside various types of peroxides in an attempt to solve the known "yellowing" and "frosting" issues. A surprising finding was that these issues were solved when using ketone peroxides; using other organic peroxides resulted in coloring (X), frosting (O), or both. A further unexpected finding was that these issues were also solved when using hydrogen peroxide (H₂O₂). Interestingly, these issues were not solved when using pure organic hydroperoxides such as cumene hydroperoxide (ex. 2J) and t-butyl hydroperoxide (resin did not cure). Based on these findings, and without wishing to be bound or limited by theory, it is postulated that the efficacy of the ketone peroxides in this cure system may, in part, be related to the ketone peroxides generally comprising an amount of hydrogen peroxide (by virtue of the dynamic equilibria in which ketone peroxides tend to exist under standard laboratory conditions). Each of Examples 2A-2M were performed by mixing the stated reagents in the stated amounts (parts by weight) in a test tube (first add the accelerator and resin, then add the peroxide) and then curing the MMA resin.

| | **2A** | **2B** | **2C** | **2D** | **2E** | **2F** | **2G** | **2H** | **2I** | **2J** | **2K** | **2L** | **2M** |
|---|---|---|---|---|---|---|---|---|---|---|---|---|---|
| MMA syrup* | 100 | 100 | 100 | 100 | 100 | 100 | 100 | 100 | 100 | 100 | 100 | 100 | 100 |
| Butanox P-501 | 3 | | | | | | | | | | | | |
| Butanox M-50² | | 3 | | | | | | | | | | | |
| Trigonox C³ | | | 2 | | | | | | | | | | |
| Perkadox L W-75⁴ | | | | 2 | | | | | | | | | |
| Perkadox L-40 RPS⁵ | | | | | 2 | | | | | | | | |
| Laurox⁶ | | | | | | 2 | | | | | | | |
| Trigonox 141⁷ | | | | | | | 2 | | | | | | |
| Trigonox 21S⁸ | | | | | | | | 2 | | | | | |
| Trigonox 42S⁹ | | | | | | | | | 2 | | | | |
| Trigonox K-90¹⁰ | | | | | | | | | | 2 | | | |
| Trigonox 117¹¹ | | | | | | | | | | | 2 | | |
| Trigonox 22C50¹² | | | | | | | | | | | | 2 | |
| Hydrogen peroxide (70%) | | | | | | | | | | | | | 1.5 |
| Ex. 1B | 2 | 2 | 3 | 3 | 3 | 3 | 3 | 3 | 3 | 3 | 3 | 3 | 3 |
| | | | | | | | | | | | | | |
| TTP (min) | 12.8 | 19.1 | 96.7 | 207.9 | 14.1 | 9.5 | 18.0 | 31.2 | 24.7 | 11.5 | 36.7 | 204 | 19.6 |
| PE (°C) | 165 | 160 | 150 | 131 | 98 | 105 | 159 | 138 | 112 | 164 | 126 | 69 | 159 |
| Colour of cured resin | C | C | X | X | X | X | X | X | X | CX | X | N/A | C |
| Opacity of cured resin | T | T | O | O | T | T | O | T | T | O | T | N/A | T |

| | | | | | | | | | | | | | |
|---|---|---|---|---|---|---|---|---|---|---|---|---|---|
| C = colorless X = yellow or brown CX = almost colorless (very slight yellowing) T = transparent O = opaque ("frosting") N/A = poor cure * MMA = methyl methacrylate ¹ methyl isopropyl ketone peroxide (MIKP) ² methyl ethyl ketone peroxide (MEKP) ³ tert-Butyl peroxybenzoate ⁴ dibenzoyl peroxide ⁵ dibenzoyl peroxide ⁶ Dilauroyl peroxide ⁷ 2,5-Dimethyl-2,5-di(2-ethylhexanoylperoxy) hexane ⁸ tert-Butyl peroxy-2-ethylhexanoate ⁹ tert-Butyl peroxy-3,5,5-trimethylhexanoate ¹⁰ cumyl hydroperoxide ¹¹ tert-butylperoxy 2-ethylhexyl carbonate ¹² 1,1-Di(tert-butylperoxy) cyclohexane | | | | | | | | | | | | | |

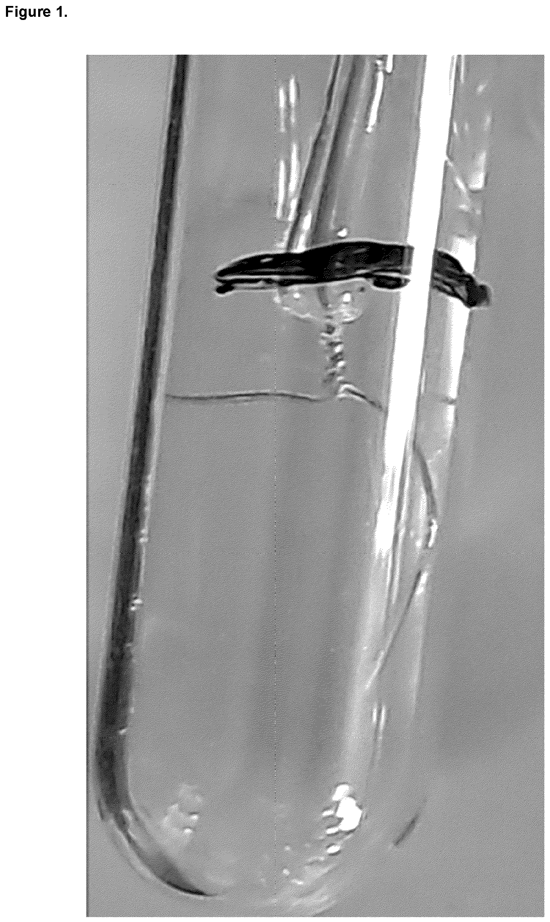

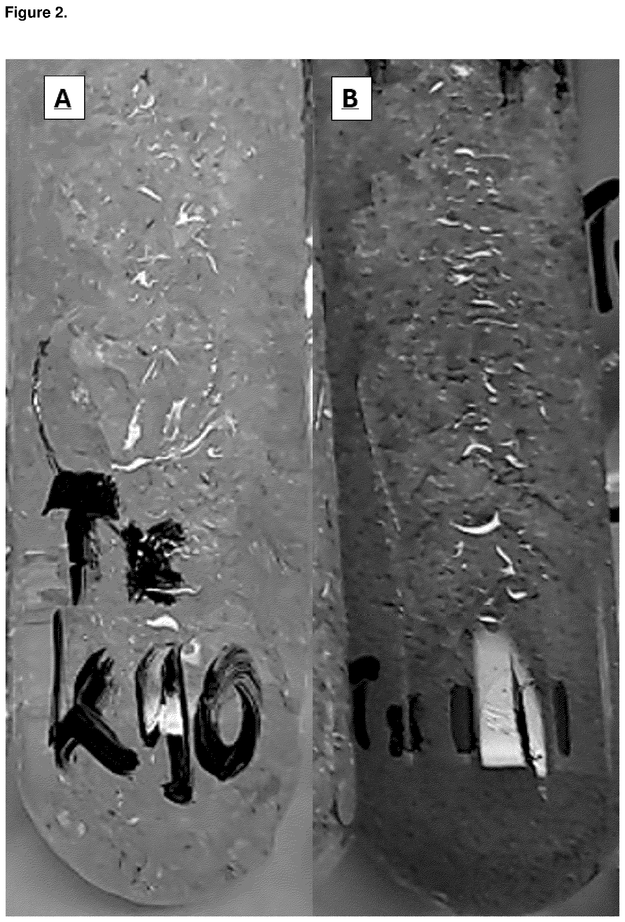

The specific accelerator compositions disclosed herein in combination with ketone peroxides or hydrogen peroxide solved both the coloring and the frosting issues associated with curing curable resins using metal-based accelerators. To assist with understanding of the substantial improvement provided by the cure system disclosed herein, close-up photographs of the cured resins are provided in Figures 1 and 2. Figure 1 is a close-up photograph of the cured resin (in the test tube) obtained when using the accelerator composition of the present disclosure in combination with a ketone peroxide (colorless and transparent, "glass-like" - the insert wire is clearly visible and there is no coloring or frosting of the resin). Figure 2A is a close-up photograph of Example 2J (in the test tube), wherein the cured resin had a slight discoloration and heavy frosting (the cured resin was opaque - the insert wire cannot be seen). Figure 2B is a close-up photograph of Example 2G (in the test tube), wherein the cured resin was brown and frosted (the cured resin was opaque - the insert wire cannot be seen).

### Example 3

Accelerator compositions 1A-D were combined with ketone peroxides to determine whether the substantial improvement observed in Example 2 could be repeated for the other accelerators of Example 1 and other unsaturated resins. In each instance the cured resin was colorless and transparent - none suffered from the discoloration or "frosting" (opacity) issues. All exhibited excellent gel time (GT), time-to-peak (TTP), and peak exotherms (PE).

| | **Ex. 2A** | **Ex. 2B** | **Ex. 2C** |
|---|---|---|---|
| Vinyl-hybrid resin¹ | 100 | | |
| Vinyl ester resin² | | 100 | |
| hydroxyethyl methacrylate | | | 100 |
| | | | |
| methyl isopropyl ketone peroxide³ | 3 | 3 | 2 |
| | | | |
| Ex. 1A | 2 | 2 | 1 |
| | | | |
| | | | |
| GT (min) | 00:02:43 | < 10 sec | 00:00:38 |
| TTP (min) | 00:05:09 | - ^{§} | 00:03:47 |
| PE (°C) | 124.9 | - ^{§} | 176.1 |
| Colour of cured resin | Colourless | Colourless | Colourless |
| Opacity of cured resin | Transparent | Transparent | Transparent |

| | | | |
|---|---|---|---|
| ¹ Advalite 35065-0 ² Beyone 700-T-01 ³ Butanox P-50 ^{§} reacted too quickly to be able to perform the experiment | | | |

| | **Ex. 2D** | **Ex. 2E** | **Ex. 2F** | **Ex. 2G** |
|---|---|---|---|---|
| Unsaturated polyester resin¹ | 100 | | | |
| Methyl methacrylate syrup | | 100 | 100 | 100 |
| | | | | |
| methyl ethyl ketone peroxide ² | 1.5 | | | |
| methyl isopropyl ketone peroxide³ | | 3 | 3 | 2 |
| | | | | |
| Ex. 1B | 2 | 2 | 1 | 2 |
| | | | | |
| | | | | |
| GT (min) | 5.05 | 0.55 | 2.03 | 0.59 |
| TTP (min) | 20.38 | 12.46 | 23.22 | 13.03 |
| PE (°C) | 137.4 | 164.6 | 158.5 | 163.4 |
| Colour of cured resin | Colourless | Colourless | Colourless | Colourless |
| Opacity of cured resin | Transparent | Transparent | Transparent | Transparent |

| | | | | |
|---|---|---|---|---|
| ¹ Palatal P4-01 ² Butanox M-50 ³ Butanox P-50 | | | | |

| | **Ex. 2H** | **Ex. 2I** |
|---|---|---|
| methyl methacrylate syrup | 100 | 100 |
| | | |
| methyl isopropyl ketone peroxide | 3 | 3 |
| | | |
| Ex. 1C | 2 | |
| Ex. 1D | | 2 |
| | | |
| GT (min) | 14.52 | 2.00 |
| TTP (min) | 42.43 | 21.06 |
| PE (°C) | 155.6 | 162.7 |
| Colour of cured resin | Colourless | Colourless |
| Opacity of cured resin | Transparent | Transparent |

### Example 4

A further advantage of the curing system of the present disclosure is that fillers can be successfully incorporated into the cured resin. For example, aluminium trihydrate (ATH) and quartz were successfully incorporated into the cured resin, yielding an intentionally opaque cured resin wherein the opacity and colour of the cured resin originated exclusively from the filler.

| | **Ex. 4A** | **Ex. 4B** | **Ex. 4C** | **Ex. 4D** |
|---|---|---|---|---|
| Unsaturated polyester resin¹ | 100 | | | |
| MMA syrup | | 100 | 100 | 100 |
| Quartz | 100 | | | |
| ATH | | 100 | 100 | 100 |
| | | | | |
| methyl ethyl ketone peroxide | 1.5 | | | |
| methyl isopropyl ketone peroxide | | 3 | 3 | 3 |
| | | | | |
| Ex. 1B | 2 | 3 | | |
| Ex. 1E | | | 3 | |
| Ex. 1F | | | | 3 |
| | | | | |
| GT (min) | 10.39 | 0.52 | 1.00 | 1.00 |
| TTP (min) | 43.35 | 19.19 | 20.20 | 19.00 |
| PE (°C) | 39.7 | 109.4 | 108.6 | 107.8 |

| | | | | |
|---|---|---|---|---|
| ¹ Palatal P4-01 | | | | |

The cure system disclosed herein therefore allows for filled cured resins to be produced wherein the resin does not affect the visual properties provided by the filler.

### Example 5

It has also been observed that the time-to-peak (TTP) can be manipulated by altering the ratio of ascorbic acid ("AA") to ascorbic acid fatty acid ester (e.g., ascorbyl palmitate, "AAP") in the accelerator composition. Examples 5A-5G used 2 pbw of the following accelerator composition, wherein the composition comprised varying weight ratios of AAP: AA.

| **component** | **Wt%** |
|---|---|
| Cu(II) acetate (monohydrate) | 0.2 |
| 2,2-bipyridine | 1 |
| Ascorbic acid palmitate (AAP) + Ascorbic acid (AA) | 21.6 [AA+AAP] |
| Triethyl phosphate | 77.2 |

| | **5A** | **5B** | **5C** | **5D** | **5E** | **5F** | **5G** |
|---|---|---|---|---|---|---|---|
| MMA syrup | 100 | 100 | 100 | 100 | 100 | 100 | 100 |
| MEKP | 3 | 3 | 3 | 3 | 3 | 3 | 3 |
| 100%AA | 2 | | | | | | |
| 80:20 AA:AAP | | 2 | | | | | |
| 60:40 AA:AAP | | | 2 | | | | |
| 50:50 AA:AAP | | | | 2 | | | |
| 40:60 AA:AAP | | | | | 2 | | |
| 20:80 AA:AAP | | | | | | 2 | |
| 100% AAP | | | | | | | 2 |
| | | | | | | | |
| | | | | | | | |
| TTP (min) | 67.5 | 45.8 | 33.8 | 33.2 | 31.1 | 31.4 | 19.1 |
| Colour | C | C | C | C | C | C | C |
| Opacity | T | T | T | T | T | T | T |

The ability to controllably manipulate the TTP is yet a further substantial benefit of the accelerator composition and cure system of the present disclosure.

### Example 6

The curing system worked well with a range of bipyridines, both with and without aluminium trihydrate (ATH) filler. Accelerator compositions were formulated as follows:

| **component** | **Wt%** |
|---|---|
| Cu(II) acetate (monohydrate) | 0.2 |

| **Bipyridine [see table below]** | **1** |
|---|---|
| Ascorbic acid palmitate | 33 |
| Triethylphosphate | 65.8 |

| | **6A** | **6B** | **6C** | **6D** | **6E** | **6F** | **6G** | **6H** |
|---|---|---|---|---|---|---|---|---|
| Curable Resin | 100 | 100 | 100 | 100 | 100 | 100 | 100 | 100 |
| ATH | | | | | 150 | 150 | 150 | 150 |
| | | | | | | | | |
| Butanox P-50 | 1.5 | 1.5 | 1.5 | 1.5 | 1.5 | 1.5 | 1.5 | 1.5 |
| | | | | | | | | |
| 2,2-bipyridine* | 2 | | | | 3 | | | |
| 4,4 dimethyl bipy* | | 2 | | | | 3 | | |
| 4,4 dimethoxy bipy* | | | 2 | | | | 3 | |
| 4,4- di t-butyl bipy* | | | | 2 | | | | 3 |
| | | | | | | | | |
| SPI 20°C | | | | | | | | |
| GT (min) | 1.7 | 3.5 | --- | 1.6 | 1.8 | 1.7 | 0.9 | 1.8 |
| TTP (min) | 13.9 | 19.7 | 31.1 | 16.6 | 26.7 | 25.1 | 30.5 | 24.6 |
| PE (°C) | 149 | 155.5 | 150.7 | 150.7 | 79.2 | 84.5 | 83.2 | 80 |

| | | | | | | | | |
|---|---|---|---|---|---|---|---|---|
| **Amounts in the table correspond to the amount of accelerator composition (pbw) comprising the specified bipy, not the amount of the specified bipy* | | | | | | | | |

### Example 7

Further experiments confirmed that the curing system disclosed herein was highly effective even with very low amounts of accelerator and oxidant.

| | **7A** | **7B** | **7C** | **7D** | **7E** |
|---|---|---|---|---|---|
| Beyone 700-T-01-FC^{a} | 100 | 100 | | | 100 |
| Acrylate resin | | | 100 | 100 | |
| | | | | | |
| Example 1B | 2 | 1 | 2 | 1 | 1 |
| Butanox M-50 | 0.1 | 0.1 | 0.1 | 0.1 | |
| H₂O₂ (70%) | | | | | 0.1 |
| | | | | | |
| **SPI 20°C** | | | | | |
| GT (min) | 2.4 | 5.2 | *too fast to measure* | 2 | *too fast to measure* |
| TTP (min) | 3.8 | 8 | | 3 | |
| PE (°C) | 125.4 | 114.9 | | 107.5 | |

| | | | | | |
|---|---|---|---|---|---|
| ^{a} *Styrene free resin based on dimethyl itaconate* | | | | | |

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. A composition comprising:
(i) a copper compound,
(ii) an ascorbic acid and/or a fatty acid ester of an ascorbic acid,
(iii) a bipyridine, and
(iv) a solvent, wherein the solvent comprises at least one phosphorous compound with the formulae P(R)₃ and/or P(R)₃=O, wherein each R is independently hydrogen, an alkyl group with 1 to 6 carbon atoms, or an alkoxy group with 1 to 6 carbon atoms.

2. The composition of claim 1, wherein the copper compound (i) comprises a copper(II) compound.

3. The composition of claims 1 or 2, wherein the copper compound (i) is copper(II) acetate.

4. The composition of any one of the preceding claims, wherein the fatty acid ester of ascorbic acid is 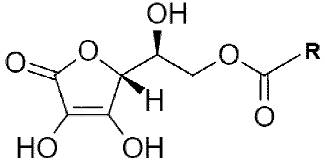 wherein R is a C8-C30 alkyl group.

5. The composition of any one of the preceding claims, wherein the fatty acid ester of ascorbic acid is an ascorbic acid palmitate, preferably ascorbyl palmitate.

6. The composition of any one of the preceding claims, wherein (iii) is a 2,2'-bipyridine of formula (II) 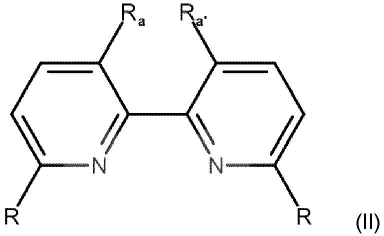 or a 2,2'-bipyridine of formula formula (III): 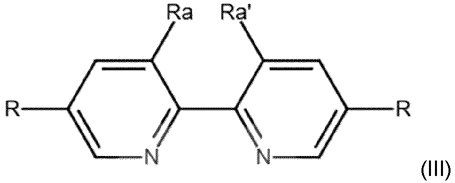 wherein:
each R is independently selected from H, alkyl, aryl, heteroaryl, or A-R², wherein A is O or NR³, and wherein R² and R³ are each independently H, alkyl, aryl, or heteroaryl; and
Ra and Ra' are H or together form a ring, preferably a C6 aromatic ring (to form a 1,10-phenanthroline).

7. The composition of any one of the preceding claims, wherein the solvent (iv) comprises or consists of one or more phosphorous compounds with the formula P(R)₃=O, wherein each R is independently an alkoxy group with 1 to 3 carbon atoms.

8. The composition of any one of the preceding claims, wherein:
component (i) is copper(II) acetate;
component (ii) is ascorbic acid and/or ascorbyl palmitate;
component (iii) is 2,2'-bipyridine; and
component (iv) comprises or consists of triethyl phosphate.

9. The composition of any one of the preceding claims, wherein the composition consists of components (i), (ii), (iii) and (iv).

10. Pre-accelerated resin composition comprising:
(i) a curable resin,
(ii) a composition according to any one of claims 1-9, and
(iii) optionally a filler and/or a reinforcement fibre.

11. The pre-accelerated resin composition of claim 10, wherein the curable resin is an unsaturated polyester resin, a vinyl ester resin, a (meth)acrylate resin, or a combination thereof.

12. A curable resin composition comprising:
(i) a pre-accelerated resin composition according to claims 10 or 11, and
(ii) at least one peroxide selected from ketone peroxides, organic peroxides comprising hydrogen peroxide, hydrogen peroxide, and mixtures thereof, preferably ketone peroxides.

13. A kit-of-parts comprising:
(i) a first component comprising a curable resin,
(ii) a second component comprising a composition according to any one of claims 1-9, and
(iii) a third component comprising at least one peroxide selected from ketone peroxides, organic peroxides comprising hydrogen peroxide, hydrogen peroxide, and mixtures thereof, preferably ketone peroxides.

14. A method for curing a curable resin, comprising contacting the curable resin with a composition according to any one of claims 1-9 and at least one peroxide selected from ketone peroxides, organic peroxides comprising hydrogen peroxide, hydrogen peroxide, and mixtures thereof, preferably ketone peroxides.

15. A cured resin obtainable by the method of claim 14.
